Europäisches Patentamt

European Patent Office

Office européen des brevets

(19)

(11) **EP 0 845 909 B1**

(12) **EUROPÄISCHE PATENTSCHRIFT**

(45) Veröffentlichungstag und Bekanntmachung des Hinweises auf die Patenterteilung:
**12.02.2003 Patentblatt 2003/07**

(51) Int Cl.⁷: **H04N 7/30**

(21) Anmeldenummer: **96440100.4**

(22) Anmeldetag: **28.11.1996**

(54) **Verfahren und Filter zur Reduzierung des Blocking Effektes**

Method and filter for reducing blocking effect

Méthode et filtre de réduction de l'effet de bloc

(84) Benannte Vertragsstaaten:
**AT BE CH DE ES FR GB IT LI NL SE**

(43) Veröffentlichungstag der Anmeldung:
**03.06.1998 Patentblatt 1998/23**

(73) Patentinhaber: **ALCATEL**
**75008 Paris (FR)**

(72) Erfinder: **Guntzburger, Philippe**
**67120 Dachstein (FR)**

(74) Vertreter: **Knecht, Ulrich Karl, Dipl.-Ing. et al**
**Alcatel**
**Intellectual Property Department, Stuttgart**
**70430 Stuttgart (DE)**

(56) Entgegenhaltungen:
**EP-A- 0 526 885          GB-A- 2 287 153**
**US-A- 5 229 864**

• **IEEE TRANSACTIONS ON CONSUMER ELECTRONICS, Bd. 40, Nr. 3, August 1994, NEW YORK US, Seiten 521-526, XP000471215 JARSKE ET AL: "post-filtering methods for reducing blocking effects from coded images"**

**Beschreibung**

Die Erfindung betrifft ein Verfahren und einen Filter zur Reduzierung des Blocking Effektes bei Komprimierungs-/Dekomprimierungsverfahren für Bildübertragungsverfahren oder Bildspeicherung.

Der unter dem Namen Blocking Effekt bekannte Effekt tritt auf und wird sichtbar bei der Übertragung von Bildern mit niedrigen Bitraten, d.h. Bitraten kleiner als 2 Mbits. Diese Bitraten treten typischerweise bei der Übertragung über ISDN unter Verwendung von $S_0$-Schnittstellen auf. Eine Bilddatenkompression/-dekompression wird bei den meisten Anwendungen nach dem ITU-T Standard H.261 durchgeführt. Daraus resultiert aber, daß eine Korrektur von Fehlern, die zum Blocking Effekt führen, nur am Ausgang des Decoders ausgeführt werden können.

Der Blocking Effekt tritt aufgrund folgender Umstände auf. Gemäß der H.261 ITU-T Recommendation wird ein Bild in eine Vielzahl von Blöcken aufgeteilt. Diese Blöcke sind vorzugsweise 8x8-Pixel groß. Für jeden dieser Blocks wird eine zweidimensionale diskrete Kosinustransformation (DCT) durchgeführt, deren Resultat sogenannte Transformationskoeffizienten sind. Diese Transformationskoeffizienten geben die Charakteristik eines Blocks im Frequenzbereich an. Bei der Datenkompression zur Bildübertragung werden lediglich die wenigen Koeffizienten übertragen, die einen Wert höher als eine bestimmte vordefinierte Schwelle haben. Aufgrund der Aufteilung in Blöcke von 8x8-Pixel sind 64 unterschiedliche Koeffizienten pro Block verfügbar. Zusätzlich werden diese Koeffizienten quantifiziert. Zur Dekodierung müssen die beiden Operationen der Transformation und der Quantifizierung durchgeführt werden.

Ein Informationsverlust tritt bereits durch die Segmentierung in Blöcke von 8x8 Pixeln auf, und da die Kompression ebenfalls auf Grundlage dieser Blöcke durchgeführt wird, werden weitere Informationen verloren. Das resultierende Bild weist Störungen auf, der sogenannte Blocking Effekt. Je geringer die Übertragungsrate ist, desto größer werden diese Störungen.

Aus dem Stand der Technik sind Filter bekannt, die eingesetzt werden um die Quantisierungsstörungen und somit den Blocking Effekt zu reduzieren. Ein solches Filter wurde in Form eines Algorithmus beschrieben, der auf einem zweidimensionalen 3x3-Gaußfilter basiert. Dieses Filter arbeitet so, daß es auf die am Rande eines Blockes liegenden Pixel einwirkt. Nachteilig bei diesem Filter ist es, daß sich das Filter lediglich auf die am Rand befindlichen Pixel einwirken kann. Dies führt dazu, daß Bilder mit geringerem Bildinhalt, d.h. Bilder, die wenige Einzelheiten zeigen, zwar verbessert werden, aber Bilder mit einem großen Bildinhalt, d.h. Bilder, die viele Einzelheiten zeigen, keine Verbesserung aufweisen, vielmehr sogar noch schlechter werden. (Aus: "Reduction of Blocking Effects in Image Coding", H.C. Reeve III, J. S. Lim, Optical Engineering Vol. 23 Nr. 1, Februar 1984, Seiten 34-37.)

Eine Verbesserung tritt bei einem weiteren verwendeten Filter auf, bei dem das Filter entweder eine 3x1 Pixel oder eine 1x3 Pixel-Form aufwies. Bei Verwendung eines solchen Filters werden insbesondere die Blockecken geglättet werden. Eine solche Verwendung des Filters zeigt eine Verbesserung, dennoch bleiben Details aus solchen codierten Bereichen verwischt, die sich senkrecht zu den Blockgrenzen befinden, insbesondere wenn diese Bereiche eine gute Codierung zeigen. (Aus: "Post-Filtering of Transform-Coded Images", K.-H. Tzou, SPIE, Vol. 974, Applications of Digital Image Processing XI, 1988, Seiten 121-126.)

Ein ähnliches Filter wurde als ein eindimensionales asymetrisches Filter vorgeschlagen. Eine vorteilhafte Wirkung zeigt sich lediglich bei einem nur schwachen Auftreten des Blocking Effektes. (Aus: "Linear Filtering for Reducing Blocking Effects in Othogonal Transform Image Coding", C. Avril, T. Nguyen-Trong, Journal of Electronic Imaging, Vol. 1(2), April 1992, Seiten 183-191.)

Eine weitere gänzlich unterschiedliche Form von Filtern sind die "Space Variant Filters". Bei dieser Form von Filtern wird sowohl der Signalinhalt als auch die Geräuschinformation zur Verbesserung der Filterung des Filters verwendet. Hierbei wird gleichfalls der "Masking Effect" zur Verbesserung miteinbezogen. Dieser Effekt besagt, daß eine starke Filterung in den Partien eines Bildes vorgenommen wird, in denen nur wenige Details vorhanden sind und eine schwache Filterung vorgenommen wird in Partien eines Bildes, in denen das Bild viele Details enthält. Dies gründet sich darauf, daß das menschliche Auge in diesen Bereichen vieler Details weniger empfindlich auf Störungen reagiert. Beispielsweise ist das verwendete Filter ein eindimensionales Tiefpaßfilter. ("One-Dimensional Processing for Adaptive Image Restoration", P. Chan, J. S. Lim, aus : IEEE Interntional Conference on Acoustics, Speech and Signal Processing, San Diego, Kalifornien, 19.-21. März 1984, Seiten 37.3.1-37.3.4.) Nachteilig bei einem solchen Filter erweist sich aber, daß bei großen Störungen die Filterung nicht effizient genug ist, da an den Rändern das Filter nicht ausreichend zwischen Störung und Signal unterscheiden kann. Dies führt dazu, daß an den Rändern fast keine Filterung durchgeführt wird. Daraus resultiert, daß der Schwachpunkt dieser Methode insbesondere an den Rändern bei Auftreten des Blocking Effektes dort auftritt und nicht lösbar ist.

EP 0 526 885 A2 offenbart ein Verfahren zur Verbesserung der Bildqualität bei einem blockweisen Bilddntenkompression durch Anwendung einer angepaßten Tiefpaßfilteroperation an den Blockgrenzen. In Abhängigkeit von den Aktivitätsniveaus zweier benachbarter Blöcke wird eine verschieden starke Tiefpaßfilterung eingesetzt, mit der die Bildpunkte der jeweiligen Blockgrenze unscharf gemacht werden. Dabei werden die Werte von einzelnen Bildpunkte an der Blockgrenze eines Blockes mit Hilfe eines Wichtungsfaktors und den Wert des unmittelbar angrenzenden Bildpunktes des Nachbarblockes neu berechnet. Der Wichtungsfaktor wird unter Verwendung der Aktivitätsniveaus der benachbarten Blöcke, die die jeweilige Blockgrenze einschließen, aus einer Tabelle von vorgegebenen Wichtungsfaktoren ausgewählt. Die in der Tabelle abgelegten Wichtungsfaktoren werden basierend auf der Minimierung des mittleren quadratischen Fehlers der Bildpunkte entlang der Blockgrenze empirisch bestimmt.

GB 2 287 153 offenbart eine Vorrichtung zur Rauschunterdrückung mit Mitteln zum Vorhersagen eines mittleren Rauschen eines Blockes, Mitteln zum Vorhersagen eines Bildpunktrauschens aus den vorhergesagten mittleren Blockrauschen und Bilddaten und Mitteln zum Vorhersagen eines rauschfreien Originalbildes aus den vorhergesagten Bildpunktrauschen und dekodierten Bilddaten des Blockes. Durch die Vorhersage des Rauschen in Form von Blockrauschen und Bildpunktrauschen kann das Rauschen an den Blockgrenzen oder Kanten entfernt werden, wobei die Kantenabschnitte erhalten bleiben und dadurch die Bildqualität verbessert wird.

Aufgabe der vorliegenden Erfindung ist es nun ein Verfahren und einen Filter zu schaffen, das die Probleme des Standes der Technik löst, und somit zu einer verbesserten Reduzierung des Blocking Effektes führt.

Dies wird erfindungsgemäß gelöst durch die Lehre des Patentanspruches 1 und durch die Lehre des Patentanspruches 5.

Vorteilhaft erweist sich, daß der Blocking Effekt fast vollständig reduziert wird und gleichzeitig die Bildqualität gut bleibt, und somit für einen menschlichen Betrachter keine sichtbare Störung des Bildes mehr auftritt.

Weitere vorteilhafte Ausgestaltungen sind den Patentansprüchen 2 bis 4, und den Patentansprüchen 6 bis 8 zu entnehmen.

Besonders vorteilhaft erweist sich hierbei, daß bei Wahl einer Filtergröße von 9 Pixeln kein Blocking Effekt mehr sichtbar ist.

Im folgenden wird die Erfindung anhand von Ausführungsbeispielen und anhand der Figuren näher erläutert. Folgende Figuren zeigen:

Fig. 1 Filter der Filtergröße 5 Pixel,

Fig. 2 Filter der Filtergröße 7 Pixel,

Fig. 3 Filter der Filtergröße 9 Pixel,

Fig. 4 Ablaufdiagramm des erfindungsgemäßen Verfahrens.

Im folgenden wird (ohne Zeichnung) die Grundlage des Filters zur Reduzierung des Blocking Effektes und des Verfahrens dazu erläutert. Bei einem Verfahren und Filter zur Reduzierung des Blocking Effektes bei Komprimierungs-/Dekomprimierungsverfahren zur Bildübertragung oder Bildspeicherung liegt ein Bild, aufgeteilt in eine Vielzahl von Blöcken vor. Zur Reduzierung des Blocking Effektes wird ein Filter verwendet, dessen Filtergröße FG zuvor bestimmt wird. Die Filtergröße FG wird bestimmt gemäß

$$FG = 2 \times n + 1 \text{ für } n = 2, 3, 4... \tag{1}$$

Eine für die Reduzierung des Blocking Effektes besonders wirkungsvolle Filtergröße ergibt sich für die Bestimmung

$$FG = 2 \times n + 1 \text{ für } n = 2, 3, ......, \frac{N}{2} \tag{2}$$

mit N = der Anzahl der Bildpunkte bei einer Aufteilung in Blöcke mit NXN Bildpunkten.

Die Filtergröße FG ist in dem hier angenommenen Beispiel gleich 5. Grundlage zur Reduzierung des Blocking Effektes ist eine Schätzung $\hat{s}(i,j)$ mit dem sogenannten Linear Least Square Error (LLSE) des Originalbildes zu bestimmen. Diese bestimmt sich gemäß

$$\hat{s}(i,j) = y(i,j) \times \alpha(i,j) + \bar{y}(i,j) \times (1 - \alpha(i,j)). \tag{3}$$

Hierbei ist y(i,j) der Bildpunkt, also das Pixel in den Koordinaten i und j eines decodierten, gestörten Bildes. Der lokale Mittelwert des Bildes $\bar{y}(i,j)$ bestimmt sich nach

$$\tilde{y}(i,j) = \frac{1}{2n+1} \sum_{k=i-n}^{k=i+n} y(k,j) \qquad\qquad (4)$$

Für FG=5 ergibt sich somit:

$$\overline{y}(i,j) = \frac{1}{5} \sum_{k=i-2}^{k=i+2} y(k,j). \qquad\qquad (5)$$

$\alpha(i,j)$ ist ein Wichtungskoeffizient, der sowohl von einer Signalaktivität als auch von einer Geräuschaktivität abhängig ist. Die Bestimmung der Aktivitäten erfolgt auf Grundlage von Berechnungsmethoden wie dem Mittleren Quadratischen Fehler (Mean Square Error) oder aber dem sogenannten "Absolute Value Error", oder aber weiteren bekannten Methoden. Für den Fall, daß $\alpha$ ungefähr gleich 1 ist, wird keine Filterung vorgenommen. $\alpha$ ist ungefähr gleich 1 bei einer hohen Signalaktivität und einer geringen Geräuschaktivität. Bei geringer Signalaktivität und hoher Geräuschaktivität ist $\alpha$ ungefähr 0, also wird die Schätzung durch den ermittelten Mittelwert gemäß (4) und (5) ersetzt. Die Schätzung s(i,j) wird für jedes Pixel berechnet, um lokale Informationen über das jeweilige Pixel zu erhalten. Der Wichtungsfaktor $\alpha(i,j)$ bestimmt sich zu

$$\alpha(i,j) = \frac{AS}{AS + AB} \qquad\qquad (6)$$

mit einem Maß für eine lokale Signalaktivität AS des Originalbildes und AB der Geräuschaktivität.

Die geräuschbehaftete Signalaktivität wird bestimmt durch

$$AS = \frac{1}{4}\,(AS_{in} + AS_{aus}) \qquad\qquad (7)$$

Hierbei ist für n=2

$$AS_{in} = \sum_{k=i-2}^{k=i+2} (y(k,j) - \overline{y}(i,j)_{in})^2 \text{ und } AS_{aus} = 0 \qquad\qquad (8)$$

$$\overline{y}(i,j)_{in} = \frac{1}{5} \sum_{k=i-2}^{k=i+2} y(k,j) \qquad\qquad (9)$$

gegeben, wenn alle Filterelemente innerhalb des Blockes sind. Wenn eines der Filterelemente außerhalb des Blockes ist und sich das Filter am linken Ende des Blockes befindet, gelten folgende Formeln:

$$AS_{in} = \sum_{k=i-1}^{k=i+2} (y(k,j) - \overline{y}(i,j)_{in})^2 \text{ und } AS_{aus} = 0 \qquad\qquad (10)$$

$$\overline{y}(i,j)_{in} = \frac{1}{4} \sum_{k=i-1}^{k=i+2} y(k,j). \qquad\qquad (11)$$

Für den Fall, daß vier Filterelemente innerhalb des Blocks sind und sich das Filter am rechten Ende des Blockes befindet, gelten folgende Formeln:

$$AS_{in} = \sum_{k=i-2}^{k=i+1} (y(k,j) - \overline{y}(i,j)_{in})^2 \text{ und } AS_{aus} = 0 \qquad\qquad (12)$$

$$\overline{y}(i,j)_{in} = \frac{1}{4} \sum_{k=i-2}^{k=i+1} y(k,j). \tag{13}$$

Für den Fall, daß drei Elemente sich innerhalb des Blockes befindenund zwei außerhalb des Blockes und das Filter sich am linken Rand befindet, gelten folgende Formeln:

$$AS_{in} = \sum_{k=i}^{k=i+2} (y(k,j) - \overline{y}(i,j)_{in})^2 \tag{14}$$

$$AS_{aus} = \sum_{k=i-2}^{k=i-1} (y(k,j) - \overline{y}(i,j)_{aus})^2 \tag{15}$$

$$\overline{y}(i,j)_{in} = \frac{1}{3} \sum_{k=i}^{k=i+2} y(k,j) \tag{16}$$

$$\overline{y}(i,j)_{aus} = \frac{1}{2} \sum_{k=i-2}^{k=i-1} y(k,j). \tag{17}$$

Für den Fall, daß sich das Filter am rechten Rand befindet und drei Elemente innerhalb und zwei Elemente außerhalb sind, gilt:

$$AS_{in} = \sum_{k=i-2}^{k=i} (y(k,j) - \overline{y}(i,j)_{in})^2 \tag{18}$$

$$As_{aus} = \sum_{k=i+1}^{k=i+2} (y(k.j) - \overline{y}(i,j)_{aus})^2 \tag{19}$$

$$\overline{y}(i,j)_{in} = \frac{1}{3} \sum_{k=i-2}^{k=i} y(k,j) \tag{20}$$

$$\overline{y}(i,j)_{aus} = \frac{1}{2} \sum_{k=i+1}^{k=i+2} y(k,j). \tag{21}$$

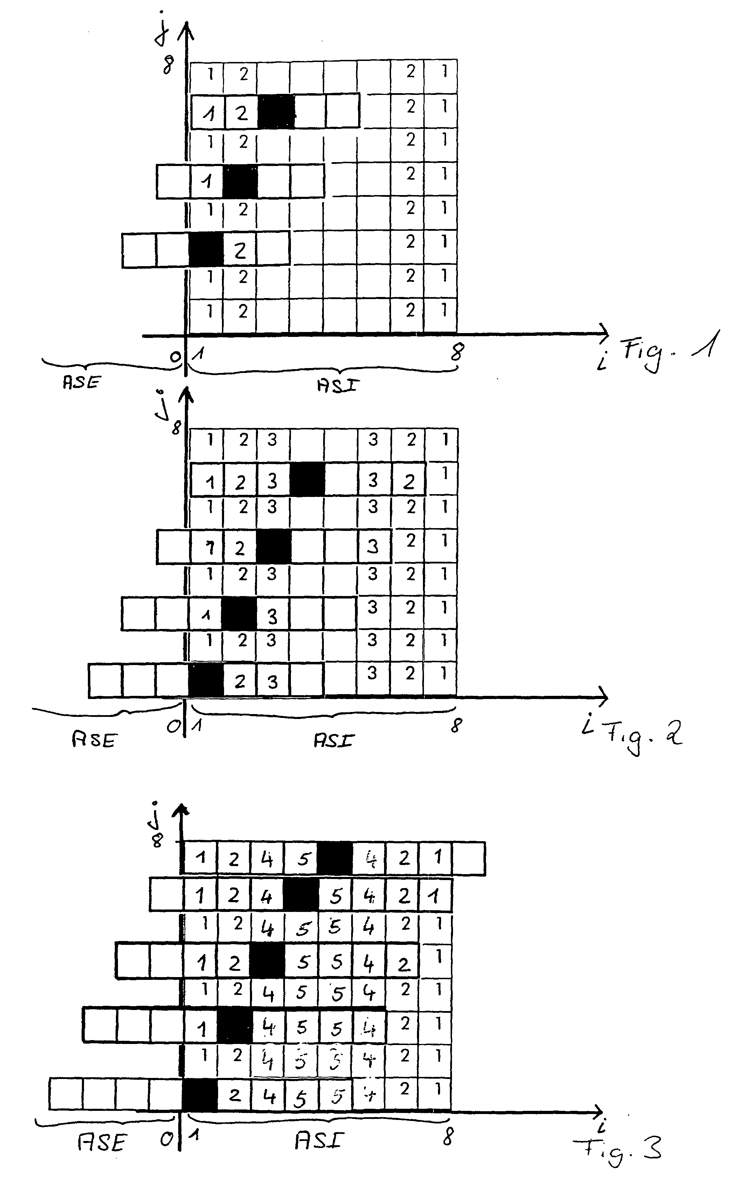

Im folgenden wird die Verwendung der vorgenannten Formeln anhand der Fig. 1 näher erläutert. Fig. 1 zeigt einen Block mit 8x8 Bildpunkten. Zusätzlich sind Koordinaten i und j eingefügt. In dem hier vorliegenden Beispiel soll die Filterung in horizontaler Richtung gezeigt werden. Die vertikale Filterung erfolgt in gleicher Weise und wird lediglich der Übersichtlichkeit halber nicht gezeigt. Ein Filter besitzt eine Filtergröße FG=5. Das Filter ist durch den stärker umrandeten Bereich mit einem schwarzen Feld in der Mitte gekennzeichnet. Eine Filterung wird in den Bereichen vorgenommen, die von dem Filter überdeckt werden. Für den Wert j=7 ist ein Filter dargestellt, das vollständig innerhalb des Blockes vorhanden ist. Im Bereich j=5 ist ein Filter am linken Rand des Blockes dargestellt, von dem vier Elemente innerhalb des Blockes und ein Element außerhalb des Blockes dargestellt sind. Für den Wert j=3 finden sich drei Elemente des Filters innerhalb des Blockes und zwei befinden sich außerhalb. Bei dem Verfahren zur Reduzierung des Blocking Effektes wird eine Signalaktivität ASI zwischen Bildpunkten innerhalb des Blockes ermittelt, indem diese über die Filtergröße FG ermittelt wird. Dies wird in den vorangegangenen Formeln durch die Werte $AS_{in}$ und $y(i,j)_{in}$ wiedergegeben. Dies bedeutet nun, daß die Signalaktivität zwischen Bildpunkten aller Filterelemente, die sich innerhalb des Blockes befinden ermittelt wird. Zusätzlich wird eine Signalaktivität ASE zwischen Bildpunkten außerhalb des Blockes ermittelt. Dies wird in den vorangegangenen Formeln durch die Werte $AS_{aus}$ und $y(i,j)_{aus}$ repräsentiert. Dies erfolgt ebenfalls durch Ermittlung der Signalaktivität zwischen den Bildpunkten die innerhalb des überdeckten Filterbereiches FG liegen. Durch Addition der Signalaktivität ASI innerhalb des Blockes und der Signalaktivität ASE außerhalb des Blockes wird ein Maß AS für eine lokale Signalaktivität gebildet. Durch die Bestimmung über die Blockgrenzen hinaus wird der Einfluß des 'blocking Effektes', also der Geräuschaktivität an den Rändern, auf den Wert der lokalen Signalaktivität verringert. Ebenfalls ermittelt wird eine Geräuschaktivität AB des Blockes. Wie bereits zuvor erläutert, wird ein Wichtungskoeffizient $\alpha$ gebildet gemäß

$$\alpha = \frac{AS}{AS + AB}. \tag{22}$$

Mittels dieses Wichtungskoeffizienten $\alpha$ wird eine Schätzung $\hat{s}(i,j)$ in horizontaler Richtung gemäß

$$\hat{s}(i,j) = y(i,j) \times \alpha(i,j) + \bar{y}(i,j) \times (1-\alpha(i,j)) \tag{23}$$

gebildet. Hierbei ist $y(i,j)$ gleich einem Bildpunkt in den Koordinaten i, j und $\bar{y}(i,j)$ ist gleich einem Mittelwert.

In der Fig. 1 sind Elemente innerhalb des Blockes angezeigt, die durch eine 1 markiert sind. Hierbei wird immer von der Position ausgegangen, auf der sich das mittlere Element des Filters, das durch das dunkle Feld gekennzeichnet ist, befindet. Die 1 kennzeichnet diejenigen Elemente oder Pixel eines Blockes, bei denen das Filter sich in der Position befindet, daß drei Elemente innerhalb des Blockes und zwei Elemente außerhalb des Blockes sind. Dies existiert sowohl am linken als auch am rechten Rand. Die durch 2 gekennzeichneten Elemente repräsentieren diejenigen Pixel eines Blockes, bei denen sich bei Überdeckung durch das Filter, vier Elemente des Filters innerhalb des Blockes befinden und ein Element des Filters außerhalb des Blockes. Die anderen Elemente, die keine Kennzeichnung enthalten, sind diejenigen Pixel, bei denen sich das gesamte Filter innerhalb des Blockes befindet. Entscheidend für die Markierung ist immer wieder der schwarz hervorgehobene Bereich des Filters. Das Verfahren zur Reduzierung des Blocking Effektes arbeitet mit dem Filter und für die angegebenen Bildpunkte findet eine Berechnung gemäß der vorangegangenen Formeln statt. Hieraus läßt sich leicht erkennen, daß für die am äußersten linken Rand und die am äußersten rechten Rand befindlichen Bildpunkte eines Blockes zwei weitere Bildpunkte innerhalb des Blockes und zwei Bildpunkte des benachbarten Blockes zur Berechnung herangezogen werden.

Im folgenden wird anhand von Fig. 2 die Verwendung eines Filters mit der Filtergröße FG=7 erläutert. Grundlage für die Ermittlung der Filtergröße FG ist Formel (1), woraus sich ergibt, daß n=3 ist. Entsprechend der in Fig. 1 angegebenen Bereiche kennzeichnet 1 dasjenige Element innerhalb eines Blockes, bei dem sich vier Bildpunkte innerhalb des Blockes und drei Filterelemente außerhalb des Blockes befinden. 2 gibt den Bereich an, bei dem sich fünf Filterelemente innerhalb des Blockes und zwei Filterelemente außerhalb des Blockes befinden. 3 gibt die Elemente an, bei denen sich sechs Filterelemente innerhalb des Blockes befinden und ein Filterelement außerhalb des Blockes. Ein nicht gekennzeichnetes Element des Blockes gibt das Filterelement an, bei dem sich das Filter vollständig innerhalb des Blockes befindet. Durch die Erweiterung der Filtergröße auf FG=7 reduziert sich der Bereich, bei dem sich das ganze Filter innerhalb des Blockes befindet. In Fig. 2 dargestellt ist bei j=7 ein Filter, das sich vollständig innerhalb des Blockes befindet, bei j=5 ein Filter, das sich mit sechs Filterelementen innerhalb des Blockes befindet und mit einem außerhalb. Für j=3 ist ein Filter dargestellt, bei dem sich fünf Filterelemente innerhalb des Blockes befinden uns zwei sich außerhalb des Blockes befinden, und für j=1 ist das Filter dargestellt, bei dem sich vier Filterelemente innerhalb des Blockes befinden und drei außerhalb. Die Zuordnung zu den einzelnen Werten von j ist hierbei nur beispielhaft, denn ein Filter wird in horizontaler Richtung für jeden Bildpunkt einmal eine Berechnung durchführen. Auch ist die Angabe eines horizontalen Filters nur beispielhaft, denn ebenfalls wird eine vertikale Filterung durchgeführt, die aber hier aus Übersichtsgründen nicht angezeigt wird.

Im folgenden wird Fig. 3 näher erläutert. In Fig. 3 dargestellt ist ebenfalls ein Block, der sich aus 8x8-Pixeln zusammensetzt. Hierbei wurde eine Filtergröße auf FG=9 festgelegt. Daraus ergibt sich, daß n=4 ist. Mit der Filtergröße FG=9 existiert kein Element mehr innerhalb des Blockes, in dem sich das ganze Filter innerhalb des Blockes befindet. Weiter existent sind aber die Elemente 1 und 2. Bei 1 befinden sich fünf Filterelemente innerhalb des Blockes und vier außerhalb, und bei 2 befinden sich sechs Filterelemente innerhalb des Blockes und drei außerhalb. 4 gibt an, daß sich sieben Filterelemente innerhalb des Blockes befinden und zwei Filterelemente sich außerhalb des Blockes. 5 gibt an, daß der gesamte Block von dem Filter überdeckt ist und daß ein Filterelementt sich außerhalb befindet. Die Berechnung der Schätzung $\hat{s}(i,j)$ erfolgt nach den vorangegangenen erläuterten Formeln.

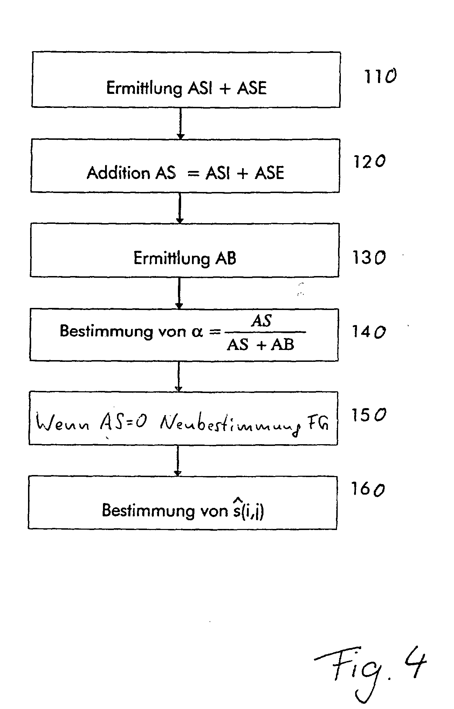

Im folgenden wird anhand von Fig. 4 das erfindungsgemäße Verfahren näher erläutert. In einem ersten Schritt 110 erfolgt die Ermittlung der Signalaktivität ASI zwischen Bildpunkten innerhalb des Blockes und die Ermittlung der Signalaktivität ASE zwischen Bildpunkten außerhalb des Blockes. In einem nächsten Schritt 120 werden die Signalaktivitäten addiert zu einem Maß AS für eine lokale Signalaktivität. In einem nächsten Schritt 130 wird ebenfalls eine Geräuschaktivität AB des Blockes ermittelt. Ein Wichtungskoeffizient α wird gemäß Formel (22) bestimmt, in dem die Geräuschaktivität AB und diese lokale Signalaktivität AS festgelegt werden, Schritt 140. In einem weiteren Schritt 150 wird die Filtergröße FG unter Umständen neu bestimmt. Dies erfolgt entsprechend der Formel (1), wobei für den Fall, daß die lokale Signalaktivität Null ist die Filtergröße vergrößert werden muß, z.B anstelle FG=5 eine Filtergröße FG=7 gewählt wird. In einem nächsten Schritt 160 wird eine Schätzung s(i,j) bestimmt. Die Schätzung s(i,j) ergibt sich gemäß Formel (3). Gemäß Formel (4) wird ein lokaler Mittelwert des Bildes ȳ (i,j) bestimmt. Die so erfolgt horizontale Schätzung wird gleichfalls in vertikaler Richtung durchgeführt.

Die Verwendung eines solchen Filters zur Reduzierung des Blocking Effektes kann bei allen z.B. nach H. 261oder nach H. 263 oder nach MPEG1 oder nach MPEG2 oder nach MPEG4 oder nach JPEG codierten Bildern erfolgen und ist für alle anwendbar bei denen eine blockweise Segmentierung vorliegt. Für die vorangegangenen Verfahren und das Filter zur Reduzierung des Blocking Effektes soll bei der Ermittlung einer Geräuschaktivität des Blockes eine Kompensation miteinbezogen werden. Dies ist bei folgendem Fall notwendig. Angenommen an den Rändern eines Blockes befinden sich als Bildinhalt scharfe Ränder eines Bildes. Dieser scharfe Rand, der in dem Originalbild ebenso dargestellt ist, würde bei der Filterung als großer Fehler erkannt werden und eine starke Reduzierung des Fehlers würde eintreten. Daraus ergibt sich aber, daß beispielsweise bei erkannten Fehlern größer einem bestimmten Wert gerade keine Kompensation durchgeführt werden soll, weil sich im Originalbild ein wirkliches Motiv, z. B. ein scharfer Rand, befindet. Demgemäß würde dann ein nicht vorhandener Fehler als Fehler erkannt werden und reduziert werden. Hierzu wird ein δ zwischen zwei Bildpunkten gebildet. Ist dieses δ beispielsweise größer als 50 kann davon ausgegangen werden, daß es eine wirkliche Kante in einem Originalbild ist und kein Fehler vorhanden ist, weshalb keine Reduzierung des Blocking Effektes notwendig ist.

**Patentansprüche**

1. Verfahren zur Reduzierung des Blocking Effektes bei Komprimierungs/Dekomprimierungsverfahren für Bildübertragung oder Bildspeicherung von in eine Vielzahl von Blöcken aufgeteilten Bildern, bei dem zur Reduzierung des Blocking Effektes eine Schätzung eines Bildpunktes ($y(i,j)$) eines Blockes durchgeführt wird, wobei eine erste Signalaktivität von Bildpunkten innerhalb des Blockes und eine zweite Signalaktivität von Bildpunkten außerhalb des Blockes bestimmt und unter Verwendung der ersten und zweiten Signalaktivität ein Wichtungskoeffizient zur Ermittlung der Schätzung bestimmt wird, **dadurch gekennzeichnet, daß** zur Schätzung (s($i,j$)) des Bildpunktes ($y(i,j)$) ein Filter verwendet und ein Filterbereich durch Bestimmen einer Filtergröße (FG) des Filters gemäß 2 x n + 1, mit $n \in N$ (n ist Element der natürlichen Zahlen) und $n \geq 2$, festgelegt wird, und daß die erste Signalaktivität ($AS_{in}$) von den Bildpunkten (y(i,j)) aus dem durch die Filtergröße (FG) vorgegeben Bereich des Filter innerhalb des Blockes und die zweite Signalaktivität ($AS_{out}$) von den Bildpunkten ($y(i,j)$) aus dem durch die Filtergröße (FG) vorgegeben Bereich des Filter außerhalb des Blockes bestimmt werden, wobei ein Maß (AS) für eine lokale Signalaktivität durch Addition von erster ($AS_{in}$) und zweiter Signalaktivität ($AS_{out}$) bestimmt, eine Geräuschaktivität (AB) des Blockes ermittelt und der Wichtungskoeffizienten (α) aus dem Maß (AS) für die lokale Signalaktivität und der Geräuschaktivität (AB) bestimmt wird.

2. Verfahren nach Anspruch 1, **dadurch gekennzeichnet, daß** die Schätzung $\hat{s}(i,j)$ des Bildpunktes $y(i,j)$ mittels eines Filters in horizontaler Richtung (*i*) gemäß

$$\hat{s}(i,j) = y(i,j) x \alpha(i,j) + \bar{y}(i,j) x (1 - \alpha(i,j)),$$

bestimmt wird, wobei $y(i,j)$ ein Bildpunkt mit den Koordinaten (*i,j*) und $\bar{y}(i,j)$ der Mittelwert des Bildpunktes $y(i,j)$ über dem Filterbereich gemäß

$$\bar{y}(i,j) = \frac{1}{FG} \sum_{k=i-n}^{k=i+n} y(k,j)$$

ist, und
der Wichtungsfaktor α gemäß

$$\alpha = \frac{AS}{AS + AB}$$

aus dem Maß AS für eine lokaler Signalaktivität und der Geräuschaktivität AB bestimmt und das Maß AS für die lokale Signalaktivität gemäß

$$AS = \frac{1}{4}(AS_{in} + AS_{out})$$

aus erster $AS_{in}$ und zweiter Signalaktivität $AS_{out}$ bestimmt wird.

3. Verfahren nach Anspruch 1 oder 2, **dadurch gekennzeichnet, daß** die Ermittlung der Schätzung $\hat{s}(i,j)$ zunächst mit einem Filter der Filtergröße FG=5 erfolgt und wenn die Ermittlung des Maßes AS der lokalen Signalaktivität den Wert Null liefert, die Filtergröße (FG) für eine weitere Schätzung $s(i,j)$ gemäß

      FG = 2 x n + 1, mit n $\in$ N und n $\geq$ 3, insbesondere mit n= 3 oder n=4, neu bestimmt wird.

4. Verfahren nach einem der Ansprüche 1 bis 3, **dadurch gekennzeichnet, daß** die Schätzung $\hat{s}(i,j)$ des Bildpunktes $y(i,j)$ mittels eines Filters in vertikaler Richtung ($j$) gemäß

$$\hat{s}(i,j) = y(i,j) x \alpha(i,j) + \bar{y}(i,j) x (1 - \alpha(i,j))$$

bestimmt wird, wobei $y(i,j)$ ein Bildpunkt mit den Koordinaten ($i,j$) und $\bar{y}(i,j)$ der Mittelwert des Bildpunkte über dem Filterbereich gemäß

$$\bar{y}(i,j) = \frac{1}{FG} \sum_{k=j-n}^{k=j+n} y(i,k) \text{ ist,}$$

der Wichtungsfaktor $\alpha$ gemäß

$$\alpha = \frac{AS}{AS + AB}$$

aus dem Maß AS für eine lokale Signalaktivität und der Geräuschaktivität AB bestimmt und das Maß AS für die lokale Signalaktivität gemäß

$$AS = \frac{1}{4}(AS_{in} + AS_{out})$$

aus erster $AS_{in}$ und zweiter Signalaktivität $AS_{out}$ bestimmt wird.

5. Filter zur Reduzierung des Blocking Effektes bei Komprimierungs-/Dekomprimierungsverfahren für Bildübertragung oder Bildspeicherung von in eine Vielzahl von Blöcken aufgeteilten Bildern, mit Mitteln zur Schätzung eines Bildpunktes ($y(i,j)$) eines Blockes zur Reduzierung des Blocking Effektes, Mitteln zum Bestimmen einer ersten Signalaktivität von Bildpunkten innerhalb des Blockes und einer zweiten Signalaktivität von Bildpunkten außerhalb des Blockes und Mitteln zur Bestimmung eines Wichtungskoeffizienten unter Verwendung der ersten und zweiten Signalaktivität zur Ermittlung der Schätzung, **dadurch gekennzeichnet, daß** zur Schätzung ($\hat{s}(i,j)$) des Bildpunktes ($y(i,j)$) weiterhin Mittel vorgesehen sind, um ein Filter zu setzen und einen Filterbereich durch Bestimmen einer Filtergröße (FG) des Filters gemäß 2 x n + 1, mit n $\in$ N (n ist Element der natürlichen Zahlen) und n $\geq$ 2, festzulegen, so daß die erste Signalaktivität ($AS_{in}$) von den Bildpunkten ($y(i,j)$) aus dem durch die Filtergröße (FG) vorgegeben Bereich des Filter innerhalb des Blockes und die zweite Signalaktivität ($AS_{out}$) von den Bildpunkten ($y(i,j)$) aus dem durch die Filtergröße (FG) vorgegeben Bereich des Filter außerhalb des Blockes bestimmt wird, und wobei Mittel zum Bestimmen eines Maßes (AS) für eine lokale Signalaktivität durch Addition von erster ($AS_{in}$) und zweiter Signalaktivität ($AS_{out}$), Mittel zum Ermitteln einer Geräuschaktivität (AB) des Blockes und Mittel zum Bestimmen des Wichtungskoeffizienten ($\alpha$) aus dem Maß (AS) für die lokale Signalaktivität und die Geräuschaktivität (AB) vorgesehen sind.

6. Filter nach Anspruch 5, **dadurch gekennzeichnet, daß** die Schätzung $\hat{s}(i,j)$ des Bildpunktes $y(i,j)$ mittels eines Filters in horizontaler Richtung ($i$) gemäß

$$\hat{s}(i,j) = y(i,j) \times \alpha(i,j) + \bar{y}(i,j) \times (1-\alpha(i,j)),$$

bestimmt wird, wobei $y(i,j)$ ein Bildpunkt mit den Koordinaten ($i,j$) und $\bar{y}(i,j)$ der Mittelwert des Bildpunktes $y(i,j)$ über dem Filterbereich gemäß

$$\bar{y}(i,j) = \frac{1}{FG} \sum_{k=i-n}^{k=i+n} y(k,j)$$

ist, und
der Wichtungsfaktor $\alpha$ gemäß

$$\alpha = \frac{AS}{AS + AB}$$

aus dem Maß AS für eine lokaler Signalaktivität und die Geräuschaktivität AB bestimmt und das Maß AS für die lokale Signalaktivität gemäß

$$AS = \frac{1}{4} (AS_{in} + AS_{out})$$

aus erster $AS_{in}$ und zweiter Signalaktivität $AS_{out}$ bestimmt wird.

7. Filter nach Anspruch 5 oder 6, **dadurch gekennzeichnet, daß** die Ermittlung der Schätzung $\hat{s}(i,j)$ zunächst mit einem Filter der Filtergröße FG=5 erfolgt und wenn die Ermittlung des Maßes AS für die lokale Signalaktivität den Wert Null liefert, die Filtergröße (FG) für eine weitere Schätzung $s(i,j)$ gemäß
FG = 2 x n + 1, mit $n \in N$ und $n \geq 3$, insbesondere mit n= 3 oder n=4, neu bestimmt wird.

8. Filter nach einem der Ansprüche 5 bis 7, **dadurch gekennzeichnet, daß** die Schätzung $\hat{s}(i,j)$ des Bildpunktes $y$ ($i,j$) mittels eines Filters in vertikaler Richtung ($j$) gemäß

$$\hat{s}(i,j) = y(i,j) \times \alpha(i,j) + \bar{y}(i,j) \times (1-\alpha(i,j))$$

bestimmt wird, wobei $y(i,j)$ ein Bildpunkt mit den Koordinaten ($i,j$) und $\bar{y}(i,j)$ der Mittelwert des Bildpunkte über dem Filterbereich gemäß

$$\bar{y}(i,j) = \frac{1}{FG} \sum_{k=j-n}^{k=j+n} y(i,k) \ \text{ist,}$$

der Wichtungsfaktor $\alpha$ gemäß

$$\alpha = \frac{AS}{AS + AB}$$

aus dem Maß AS für eine lokale Signalaktivität und die Geräuschaktivität AB bestimmt und das Maß AS für die lokale Signalaktivität gemäß

**Claims**

1. Method for reducing the blocking effect in compression/decompression methods for image transmission or image storage of images divided into a plurality of blocks, in which an estimate of a pixel ($y(i,j)$) of a block is made in order to reduce the blocking effect, a first signal activity of pixels inside the block and a second signal activity of pixels outside the block being determined, and a weighting coefficient for calculating the estimate being determined by using the first and second signal activities, **characterised in that** a filter is used for the estimate ($s(i,j)$) of the pixel ($y(i,j)$), and a filter region is established by determining a filter size (FG) of filter according to $2 \times n + 1$, with $n \in N$ (n is an element of the natural numbers) and $n \geq 2$, and **in that** the first signal activity ($AS_{in}$) of the pixels ($y(i,j)$) is determined from the region of the filter specified by the filter size (FG) inside the block, and the second signal activity ($AS_{out}$) of the pixels ($y(i,j)$) is determined from the region of the filter specified by the filter size (FG) outside the block, a measure (AS) of a local signal activity being determined by adding the first ($AS_{in}$) and second ($AS_{out}$) signal activities, a noise activity (AB) of the block being calculated and the weighting coefficients ($\alpha$) being determined from the measure (AS) of the local signal activity and the noise activity (AB).

2. Method according to Claim 1, **characterised in that** the estimate $\hat{s}(i,j)$ of the pixel $y(i,j)$ is determined by means of a filter in the horizontal direction ($i$) according to $\hat{s}(i,j) = y(i,j) \times \alpha(i,j) + \bar{y}(i,j) \times (1-\alpha(i,j))$, $y(i,j)$ being a pixel with the coordinates ($i,j$) and $\bar{y}(i,j)$ being the average of the pixel $y(i,j)$ over the filter region according to

$$\bar{y}(i,j) = \frac{1}{FG} \sum_{k=i-n}^{k=i+n} y(k,j),$$

and
the weighting factor $\alpha$ is determined according to

$$\alpha = \frac{AS}{AS + AB}$$

from the measure AS of a local signal activity and the noise activity AB, and
the measure AS of the local signal activity is determined according to

$$AS = \frac{1}{4}(AS_{in} + AS_{out})$$

from the first $AS_{in}$ and second $AS_{out}$ signal activities.

3. Method according to Claim 1 or 2, **characterised in that** the calculation of the estimate $\hat{s}(i,j)$ initially takes place with a filter of the filter size FG = 5, and if the calculation of the measure AS of the local signal activity gives the value zero, the filter size (FG) for a further estimate $\hat{s}(i,j)$ is determined again according to
FG = $2 \times n + 1$, with $n \in N$ and $n \geq 3$, in particular with $n = 3$ or $n = 4$.

4. Method according to one of Claims 1 to 3, **characterised in that** the estimate $\hat{s}(i,j)$ of the pixel $y(i,j)$ is determined by means of a filter in the vertical direction ($j$) according to

$$\hat{s}(i,j) = y(i,j) \times \alpha(i,j) + \bar{y}(i,j) \times (1-\alpha(i,j)),$$

$y(i,j)$ being a pixel with the coordinates ($i,j$) and $\bar{y}(i,j)$ being the average of the pixel over the filter region according to

$$\bar{y}(i,j) = \frac{1}{FG} \sum_{k=j-n}^{k=j+n} y(i,k),$$

the weighting factor $\alpha$ is determined according to

$$\alpha = \frac{AS}{AS + AB}$$

from the measure AS of a local signal activity and the noise activity AB,
and the measure AS of the local signal activity is determined according to

$$AS = \frac{1}{4} (AS_{in} + AS_{out})$$

from the first $AS_{in}$ and second $AS_{out}$ signal activities.

5. Filter for reducing the blocking effect in compression/decompression methods for image transmission or image storage of images divided into a plurality of blocks, with means for estimating a pixel ($y(i,j)$) of a block in order to reduce the blocking effect, means for determining a first signal activity of pixels inside the block and a second signal activity of pixels outside the block, and means for determining a weighting coefficient by using the first and second signal activities in order to calculate the estimate being determined, **characterised in that**, for the estimate ($\hat{s}(i,j)$) of the pixel ($y(i,j)$), means are furthermore provided in order to set a filter and to establish a filter region by determining a filter size (FG) of the filter according to $2 \times n + 1$, with $n \in N$ (n is an element of the natural numbers) and $n \geq 2$, so that the first signal activity ($AS_{in}$) of the pixels ($y(i,j)$) is determined from the region of the filter specified by the filter size (FG) inside the block, and the second signal activity ($AS_{out}$) of the pixels is determined from the region of the filter specified by the filter size (FG) outside the block, and means for determining a measure (AS) of a local signal activity by adding the first ($AS_{in}$) and second ($AS_{out}$) signal activities, means for calculating a noise activity (AB) of the block and means for determining the weighting coefficients ($\alpha$) from the measure (AS) of the local signal activity and the noise activity (AB) being provided.

6. Filter according to Claim 5, **characterised in that** the estimate $\hat{s}(i,j)$ of the pixel $y(i,j)$ is determined by means of a filter in the horizontal direction ($i$) according to

$$\hat{s}(i,j) = y(i,j) \times \alpha(i,j) + \bar{y}(i,j) \times (1 - \alpha(i,j)),$$

$y(i,j)$ being a pixel with the coordinates ($i,j$) and $\bar{y}(i,j)$ being the average of the pixel $y(i,j)$ over the filter region according to

$$\bar{y}(i,j) = \frac{1}{FG} \sum_{k=i-n}^{k=i+n} y(k,j),$$

and
the weighting factor $\alpha$ is determined according to

$$\alpha = \frac{AS}{AS + AB}$$

from the measure AS of a local signal activity and the noise activity AB, and
the measure AS of the local signal activity is determined according to

$$AS = \frac{1}{4} (AS_{in} + AS_{out})$$

from the first $AS_{in}$ and second $AS_{out}$ signal activities.

7. Filter according to Claim 5 or 6, **characterised in that** the calculation of the estimate $\hat{s}(i,j)$ initially takes place with a filter of the filter size FG = 5, and if the calculation of the measure AS of the local signal activity gives the value zero, the filter size (FG) for a further estimate $\hat{s}(i,j)$ is determined again according to

FG = 2 × n + 1, with n ∈ N and n ≥ 3, in particular with n = 3 or n = 4.

8. Filter according to one of Claims 5 to 7, **characterised in that** the estimate $\hat{s}(i,j)$ of the pixel $y(i,j)$ is determined by means of a filter in the vertical direction ($j$) according to

$$\hat{s}(i,j) = y(i,j) \times \alpha(i,j) + \bar{y}(i,j) \times (1-\alpha(i,j)),$$

$y(i,j)$ being a pixel with the coordinates ($i,j$) and $\bar{y}(i,j)$ being the average of the pixel over the filter region according to

$$\bar{y}(i,j) = \frac{1}{FG} \sum_{k=j-n}^{k=j+n} y(i,k),$$

the weighting factor $\alpha$ is determined according to

$$\alpha = \frac{AS}{AS + AB}$$

from the measure AS of a local signal activity and the noise activity AB,
and the measure AS of the local signal activity is determined according to

$$AS = \frac{1}{4}(AS_{in} + AS_{out})$$

from the first $AS_{in}$ and second $AS_{out}$ signal activities.

## Revendications

1. Procédé pour la réduction de l'effet de blocage ("blocking effect") lors de procédés de compression/décompression pour la transmission d'images ou le stockage d'images réparties dans une multitude de blocs, pendant lequel une estimation d'un point d'image (y(i,j)) d'un bloc est effectuée pour la réduction de l'effet de blocage ("blocking effect"), où une première activité de signaux de points d'images à l'extérieur du bloc est déterminée et un coefficient de pondération pour la détermination de l'estimation est défini au moyen de la première et de la seconde activité de signaux, **caractérisé en ce que** pour l'estimation (s(i,j)) du point d'image (y(i,j)) un filtre est utilisé et qu'une zone de filtrage est définie par la détermination d'une taille de filtre (FG) selon 2xn+1, où n ∈ N (n est élément de l'ensemble des entiers naturels) et n >/= 2, et que la première activité de signaux ($AS_{in}$) des points d'images (y(i, j)) est déterminée à l'intérieur du bloc dans la zone de filtrage délimitée par la taille de filtre FG et la deuxième activité de signaux ($AS_{out}$) est déterminée à l'extérieur du bloc dans la zone de filtrage délimitée par la taille de filtre FG et où une mesure (AS) pour une activité locale de signaux est définie par l'addition de la première ($AS_{in}$) et de la seconde activité de signaux ($AS_{out}$), ainsi qu'une activité de bruitage (AB) du bloc et que le coefficient de pondération ($\alpha$) est déterminé à partir de la mesure (AS) pour l'activité locale de signaux et l'activité de bruitage (AB).

2. Procédé selon revendication 1, **caractérisé en ce que** l'estimation $\hat{s}(i,j)$ du point d'image y(i,j) est déterminé au moyen d'un filtre, dans la direction horizontale (i) selon la formule :

$$\hat{s}(i,j) = y(i,j) \times \alpha(i,j) + \bar{y}(i,j) \times (1-\alpha(i,j)),$$

où y(i,j) représente un point d'image avec les coordonnés (i,j) et $\bar{y}(i,j)$ la valeur moyenne d'un point d'images y(i,j) au-dessus de la zone de filtrage selon la formule :

$$\overline{y}(i, j) = \frac{1}{FG} \sum_{k=i-n}^{k=i+n} y(k, j)$$

et que le facteur de pondération $\alpha$ est déterminé selon la formule :

$$\alpha = \frac{AS}{AS + AB}$$

à partir de la mesure AS pour une activité locale de signaux et de l'activité de bruitage AB et que la mesure AS pour l'activité locale de signaux est déterminée selon

$$AS = \frac{1}{4} (AS_{in} + AS_{out})$$

à partir de la première ($AS_{in}$) et de la seconde activité de signaux ($AS_{out}$).

3. Procédé selon revendication 1 ou 2, **caractérisé en ce que** la détermination de l'estimation $\hat{s}(i,j)$ est effectuée dans un premier temps avec la taille de filtre FG=5 et que la taille de filtre (FG) est définie de nouveau pour une nouvelle estimation $\hat{s}(i,j)$ selon :
FG = 2 x n + 1, où n $\in$ N et n >/= 3, en particulier n= 3 ou n= 4,
si la détermination de la mesure AS de l'activité locale de signaux résulte dans la valeur zéro.

4. Procédé selon l'une des revendications 1 à 3, **caractérisé en ce que** l'estimation $\hat{s}(i,j)$ du point d'image y(i,j) est déterminée verticalement (j) selon :

$$\hat{s}(i,j) = y(i,j) \times \alpha(i,j) + \overline{y}(i,j) \times (1 - \alpha(i,j)),$$

où y(i,j) représente un point d'image avec les coordonnés (i,j) et $\overline{y}(i,j)$ la valeur moyenne d'un point d'images y(i,j) au-dessus de la zone de filtrage selon la formule :

$$\overline{y}(i, j) = \frac{1}{FG} \sum_{k=j-n}^{k=j+n} y(i, k)$$

et que le facteur de pondération $\alpha$ est déterminé selon la formule :

$$\alpha = \frac{AS}{AS + AB}$$

à partir de la mesure AS pour une activité locale de signaux et de l'activité de bruitage AB et que la mesure AS pour l'activité locale de signaux est déterminée selon

$$AS = \frac{1}{4} (AS_{in} + AS_{out})$$

à partir de la première ($AS_{in}$) et de la seconde activité de signaux ($AS_{out}$).

5. Filtre pour la réduction de l'effet de blocage ("blocking effect") lors de procédés de compression/décompression pour la transmission d'images ou le stockage d'images réparties dans une multitude de blocs, où des moyens sont prévus pour l'estimation d'un point d'image (y(i,j)) d'un bloc pour la réduction de l'effet de blocage ("blocking effect"), des moyens pour la détermination d'une première activité de signaux de points d'images à l'intérieur du bloc et d'une deuxième activité de signaux de points d'image à l'extérieur du bloc, ainsi que des moyens de détermination d'un coefficient de pondération à l'aide de l'utilisation de la première et de la seconde activité de signaux pour la détermination de l'estimation, **caractérisé en ce que** pour l'estimation (s(i,j)) du point d'image (y(i,j)) des moyens sont prévus pour appliquer un filtre et une zone de filtrage par la détermination d'une taille de filtre (FG) selon 2xn+1, où n ∈ N (n est élément de l'ensemble des entiers naturels) et n >/= 2, de manière que la première activité de signaux ($AS_{in}$) des points d'image (y(i,j)) est déterminée à l'intérieur du bloc dans la zone de filtrage délimitée par la taille du filtre FG et que la deuxième activité de signaux ($AS_{out}$) est déterminée à l'extérieur du bloc dans la zone de filtrage délimitée par la taille de filtre FG et où des moyens pour la détermination d'une mesure (AS) pour une activité locale de signaux sont définis par l'addition de la première ($AS_{in}$) et de la seconde activité de signaux ($AS_{out}$), et que des moyens pour la détermination d'une activité de bruitage (AB) du bloc et des moyens pour la détermination du coefficient de pondération ($\alpha$) à partir de la mesure (AS) pour l'activité locale de signaux et l'activité de bruitage (AB) sont prévus.

6. Filtre selon la revendication 5, **caractérisé en ce que** l'estimation $\hat{s}(i,j)$ du point d'image y(i,j) est déterminée horizontalement (i) selon :

$$\hat{s}(i,j) = y(i,j) \times \alpha(i,j) + \bar{y}(i,j) \times (1-\alpha(i,j)),$$

où y(i,j) représente un point d'image avec les coordonnés (i,j) et $\bar{y}(i,j)$ la valeur moyenne d'un point d'images y(i,j) au-dessus de la zone de filtrage selon la formule :

$$\bar{y}(i, j) = \frac{1}{FG} \sum_{k=i-n}^{k=i+n} y(k, j)$$

et que le facteur de pondération $\alpha$ est déterminé selon la formule :

$$\alpha = \frac{AS}{AS + AB}$$

à partir de la mesure AS pour une activité locale de signaux et de l'activité de bruitage AB et que la mesure AS pour l'activité locale de signaux est déterminée selon

$$AS = \frac{1}{4} (AS_{in} + AS_{out})$$

à partir de la première ($AS_{in}$) et de la seconde activité de signaux ($AS_{out}$).

7. Filtre selon la revendication 5 ou 6, **caractérisé en ce que** la détermination de l'estimation $\hat{s}(i,j)$ est effectuée dans un premier temps avec la taille de filtre FG=5 et que la taille de filtre (FG) est définie de nouveau pour une nouvelle estimation s(i,j) selon :
FG = 2 x n + 1, où n ∈ N et n >/= 3, en particulier n= 3 ou n= 4,
si la détermination de la mesure AS de l'activité locale de signaux résulte dans la valeur zéro.

8. Filtre selon l'une des revendications 5 à 7, **caractérisé en ce que** l'estimation $\hat{s}(i,j)$ du point d'image y(i,j) est déterminée verticalement (i) selon :

$$\hat{s}(i,j) = y(i,j) \times \alpha(i,j) + \bar{y}(i,j) \times (1-\alpha(i,j)),$$

où y(i,j) représente un point d'image avec les coordonnés (i,j) et $\bar{y}(i,j)$ la valeur moyenne d'un point d'images y(i,j) au-dessus de la zone de filtrage selon la formule :

$$\overline{y}(i,j) = \frac{1}{FG} \sum_{k=j-n}^{k=j+n} y(i,k)$$

et que le facteur de pondération $\alpha$ est déterminé selon la formule :

$$\alpha = \frac{AS}{AS + AB}$$

à partir de la mesure AS pour une activité locale de signaux et de l'activité de bruitage AB et que la mesure AS pour l'activité locale de signaux est déterminée selon

$$AS = \frac{1}{4}(AS_{in} + AS_{OUT})$$

à partir de la première ($AS_{in}$) et de la seconde activité de signaux ($AS_{OUT}$).

$$AS = \frac{1}{4}(AS_{in} + AS_{out})$$

aus erster $AS_{in}$ und zweiter Signalaktivität $AS_{out}$ bestimmt wird.

Fig. 1

Fig. 2

Fig. 3

| | |
|---|---|
| Ermittlung ASI + ASE | 110 |
| Addition AS = ASI + ASE | 120 |
| Ermittlung AB | 130 |
| Bestimmung von $\alpha = \dfrac{AS}{AS + AB}$ | 140 |
| Wenn AS=0 Neubestimmung FG | 150 |
| Bestimmung von $\hat{s}(i,i)$ | 160 |

Fig. 4